# EUROPÄISCHE PATENTSCHRIFT

(11) **EP 3 023 308 B1**
(45) Veröffentlichungstag und Bekanntmachung des Hinweises auf die Patenterteilung: **13.09.2017**
(21) Anmeldenummer: 15191796.0
(22) Anmeldetag: 28.10.2015
(51) Int. Cl.: B60R 21/215

(54) **INNENVERKLEIDUNGSTEIL UND VERFAHREN ZU SEINER HERSTELLUNG**
INTERNAL CLADDING COMPONENT AND METHOD FOR ITS PRODUCTION
PARTIE DE REVETEMENT INTERIEUR ET SON PROCEDE DE FABRICATION

(30) Priorität: 18.11.2014 DE 102014116813
(43) Veröffentlichungstag der Anmeldung: 25.05.2016
(73) Patentinhaber: International Automotive Components Group GmbH, 40472 Düsseldorf (DE)
(72) Erfinder: Sasu, Anna, 40472 Düsseldorf (DE); Bergers, Helmut, 40472 Düsseldorf (DE); Peters, Stephan, 40472 Düsseldorf (DE); Scharf, Dieter, 40472 Düsseldorf (DE)
(74) Vertreter: Liesegang, Eva

(56) Entgegenhaltungen:
- EP-A1- 1 705 076
- EP-A1- 2 684 745

## Beschreibung

Die Erfindung betrifft ein Imnenverkleidungsteil für ein Kraftfahrzeug und ein Verfahren zu seiner Herstellung.

Die Erfindung ist anwendbar auf Innenverkleidungsteile von Kraftfahrzeugen, wie eine Instrumententafel, in die eine Airbagabdeckung integriert ist. Das Innenverkleidungsteil weist eine Dekorschicht auf, die aus Leder oder einem lederähnlichen Material, wie Kunstleder, Alcantara oder ein Lederverbundmaterial bestehen kann. Die Dekorschicht kann auch aus Textil, einem Vlies, thermoplastischen oder duromeren Kunststoffen, z. B. in Form von Folien oder Häuten, oder Kombinationen dieser Materialien aufgebaut sein oder diese enthalten.

Aus der DE 10 2009 008 726 A1 ist eine Airbagabdeckung bekannt, welche umfasst: ein Formteil, eine das Formteil überdeckende Sichtbedeckung aus Leder oder lederähnlichem Material und eine Schaumschicht zwischen dem Formteil und der Sichtbedeckung. Ferner ist zwischen der Schaumschicht und der Sichtbedeckung eine Zwischenschicht eingebracht, die ein höheres Elastizitätsmodul aufweist als die Sichtbedeckung, beispielsweise eine Folie, ein Gestricke oder Gewebe. Zur Bildung einer Aufreißlinie wird eine gemeinsame Schwächung durch das Formteil, die Schaumschicht und die Zwischenschicht gebildet, während die Sichtbedeckung selbst nicht geschwächt ist und auch keine Reduzierung ihrer Wandstärke aufweist, um das ästhetische Erscheinungsbild der Sichtbedeckung nicht zu beeinträchtigen.

Die DE 10 2006 055 861 B3 beschreibt ein Innenverkleidungsteil zum Abdecken eines Airbags mit einem Träger, einer Zwischenschicht aus einem Abstandsgewirke und einer Oberflächendekorschicht aus Leder oder Kunstleder. Zur Bildung einer Aufreißlinie sind Träger und Abstandsgewirke mit Ausnahme einiger verbleibender Stege entlang der Aufreißlinie vollständig durchbrochen oder auf andere Weise geschwächt, während das Oberflächendekor keine lokale Schwächung und auch keinen Naht aufweist. Stattdessen ist eine flächige Klebeverbindung zwischen dem Oberflächendekor und der Zwischenschicht in einem längs der Aufreißlinie verlaufenden Streifen auf einer Breite von etwa 4 mm ausgespart.

Die DE 10 2009 043 498 A1 beschreibt ein weiteres Innenverkleidungsteil mit einem Träger, einer Zwischenschicht und einer Dekorschicht, wobei der Träger und die Zwischenschicht zur Bildung einer Aufreißlinie geschwächt sind, die Dekorschicht im Bereich der Aufreißlinie jedoch keine Schwächung aufweist.

In den beiden zuletzt genannten Schriften wird das Oberflächendekor selbst nicht geschwächt, um zu verhindern, dass die Aufreißlinie von der Sichtseite des Innenverkleidungsteils her wahrnehmbar ist. Um dennoch das Aufreißen der Airbagabdeckung bei Auslösen des Airbags zu gewährleisten, werden andere Maßnahmen getroffen, wie das Einbringen einer Zwischenschicht oder das Aussparen der Verklebung im Bereich der Aufreißlinie.

Bei der Herstellung von Innenverkleidungsteilen, die eine Airbagabdeckung umfassen, insbesondere solche mit einer Dekorschicht aus Leder oder einem lederähnlichen Material, die dem Innenverkleidungsteil einen sehr hochwertigen Eindruck verleiht, sind die Konstrukteure stets auf der Suche nach einem optimalen Kompromiss zwischen einem zuverlässigen und kontrollierbaren Aufreißverhalten der Airbagabdeckung bei Auslösung des Airbags und einem möglichst hochwertigen Erscheinungsbild, wobei die Aufreißlinien optisch nicht oder möglichst wenig wahrnehmbar sein sollen.

Die gattungsgemäße EP2 684 745 A1 schlägt eine Instrumententafel für ein Kraftfahrzeug vor, in die eine Airbagabdeckung integriert ist, mit einem Trägerbauteil, einer Dekorschicht aus Leder oder einem lederähnlichem Material und einer Abstandsschicht zwischen dem Trägerbauteil und der Dekorschicht. Das Trägerbauteil, die Dekorschicht und die Abstandsschicht weisen jeweils eine lokale Materialschwächung auf, die eine Aufreißlinie bildet und ein kontrolliertes Aufreißen des Innenverkleidungsteils erlaubt, wenn der Airbag auslöst. Um zu verhindern, dass diese Materialschwächung von der Oberseite der Dekorschicht her wahrnehmbar ist, ist eine Zwischenschicht zwischen die Dekorschicht und die Abstandsschicht eingebracht, die selbst keine lokale Schwächung aufweist. Die Zwischenschicht kann aus einem Vliesstoff bestehen, der aus einzelnen Fasern hergestellt ist und in sich nur einen geringen Zusammenhalt hat - anders als z. B. ein Gewebe, Gestricke oder Gewirke aus Garnen - und auch ohne eigene lokale Schwächung leicht aufgerissen werden kann.

Ausgehend von diesem Stand der Technik ist es eine Aufgabe der Erfindung, das Aufreißverhalten eines Innenverkleidungsteils, in das eine Airbagabdeckung integriert ist, weiter zu verbessern, ohne dass die Airbagabdeckung auf der Sichtseite des Innenverkleidungsteils optisch und/oder haptisch wahrnehmbar wird.

Diese Aufgabe wird durch ein Innenverkleidungsteil mit den Merkmalen von Anspruch 1 und durch ein Verfahren gemäß Anspruch 16 gelöst.

Das Innenverkleidungsteil umfasst ein Trägerbauteil und eine Dekorschicht, wobei das Trägerbauteil und die Dekorschicht jeweils eine lokale Schwächung entlang einer Schwächungslinie aufweisen, die ein kontrolliertes Aufreißen des Innenverkleidungsteils erlaubt, wenn eine vorgegebene Kraft auf das Trägerbauteil ausgeübt wird. Die Schwächungslinie kann eine Airbagabdeckung abgrenzen. Eine Zwischenschicht ist zwischen dem Trägerbauteil und der Dekorschicht angeordnet, wobei die Zwischenschicht mit der Dekorschicht verklebt ist und eine Schwächung, z.B. eine Perforierung aufweist, welche die Schwächungslinie kreuzt. Die Perforierung folgt also nicht der Schwächungslinie, sondern sie verläuft entlang einer oder mehrerer Perforationslinien, welche sich schräg zu Schwächungslinie erstrecken und diese in einem oder mehreren Schnittpunkten kreuzen. Durch die erfindungsgemäße Anordnung der Schwächungslinien ist sichergestellt, dass beim Aufreißen des Innenverkleidungsteils entlang der Schwächungslinie immer auch wenigstens ein Initialriss in der Zwischenschicht erzeugt wird, so dass diese das Aufreißverhalten nicht behindert. Durch die erfindungsgemäße schräge Anordnung der Schwächungslinien wird außerdem erreicht, dass die Zwischenschicht in der Richtung senkrecht zur Schwächungslinie eine deutlich höhere Zugfestigkeit hat als eine Zwischenschicht mit einer üblichen Schwächung entlang der Schwächungslinie des Trägerbauteils und der Dekorschicht verläuft. Dadurch kann die Zwischenschicht die Unterseite der Dekorschicht stabilisieren und verhindern, dass sich in der Dekorschicht entlang der Schwächungslinie ein Spalt bildet und die Materialschwächung dann von der Oberseite der Dekorschicht her wahrnehmbar wird.

Wenn im Kontext dieser Anmeldung Bezug genommen wird auf eine Perforierung, so kann dies eine eine Materiallage vollständig durchdringende Perforation, Öffnung oder Durchlochung oder eine die Materiallage nur teilweise durchdringende Öffnung, Ritzung, Einkerbung oder dergleichen sein, die eine Schwächung des Materials entlang der Perforationslinie erzeugt. Die Perforierung kann durch Schneiden, Stanzen, Ritzen, Prägen oder ähnliche Bearbeitung des Materials erzeugt werden.

In einer Ausgestaltung ist die Perforierung entlang mehrerer paralleler oder im Wesentlichen paralleler Perforationslinien ausgebildet, die schräg zu der Schwächungslinie verlaufen und die Schwächungslinie in mehreren Schnittpunkten kreuzen. Die Perforationslinien verlaufen also in einem Winkel ungleich 90 Grad zur Schwächungslinie, z. B. in einem Winkel von 20 Grad bis 70 Grad, insbesondere von 30 Grad bis 60 Grad. Die Perforationslinien müssen keine geraden Strecken sein, die können z. B. als Wellenlinien oder Zickzacklinien ausgestaltet sein. Die "Richtung" der Perforationslinie bezieht sich dann auf ihre Haupterstreckungsrichtung, die sich durch Verbindung von zwei Endpunkten einer Perforationslinie ergibt.

In einer Ausgestaltung ist die Perforierung entlang einer ersten Gruppe in sich paralleler oder im Wesentlichen paralleler Perforationslinien und einer zweiten Gruppe in sich paralleler oder im Wesentlichen paralleler Perforationslinien ausgebildet, wobei die Perforationslinien der ersten Gruppe und die Perforationslinien der zweiten Gruppe sich schneiden. Dadurch kann eine Zwischenschicht mit einem Netz aus Perforationslinien gebildet werden, die auf das Trägerbauteil aufgebracht werden kann. Die Perforationslinien können dadurch unabhängig von dem genauen Verlauf der Schwächungslinie angeordnet sein und dennoch schräg zu der Schwächungslinie verlaufen.

Zur Verbesserung der Stabilität der Zwischenschicht, sollten die Perforierungen, die entlang der der Perforationslinien der ersten Gruppe und der zweiten Gruppe angeordnet sind, einander nicht berühren oder schneiden.

In einer Ausgestaltung schneiden sich die Perforationslinien der ersten Gruppe und die Perforationslinien der zweiten Gruppe in einem Winkel von 90 Grad bis 170 Grad, insbesondere von 90 Grad bis 120 Grad.

In einer Ausgestaltung ist die Zwischenschicht wenigstens über einer in dem Innenverkleidungsteil gebildeten Airbagabdeckung flächig angeordnet und überspannt die Airbagabdeckung und die Schwächungslinie, wobei die Schwächungslinie die Airbagabdeckung abgrenzt. Die Zwischenschicht kann auch auf der gesamten oder auf im Wesentlichen der gesamten Fläche des Innenverkleidungsteils aufgebracht sein.

In der Regel weist die Airbagabdeckung eine oder mehrere Haupt-Aufreißlinien auf, die entlang einer ersten Richtung und einer zweiten Richtung ausgerichtet sind, die durch die Schwächungslinie definiert sind, wobei die erste Richtung zu der zweiten Richtung senkrecht oder ungefähr senkrecht sein kann. Z. B. kann die Airbagabdeckung eine im Wesentlichen rechteckige Kontur haben mit einem Scharnier entlang einer Längskante der Airbagabdeckung und mit Aufreißlinien entlang der gegenüberliegenden Längskante und der Seitenkanten. Die Perforationslinie sollte dann schräg zu der ersten Richtung und zu der zweiten Richtung, also in diesem Beispiel schräg zu den Längskanten und den Seitenkanten der rechteckigen Airbagabdeckung verlaufen.

Die Zwischenschicht kann eine Tragschicht und eine oder zwei Kleberschichten aufweisen.

Die Zwischenschicht kann Papier, Vlies, Textil oder Gewebe und Kombinationen dieser Materialien aufweisen oder aus diesen hergestellt sein. In einer vorteilhaften Ausgestaltung ist die Zwischenschicht aus einem Vliesmaterial gebildet. Das Vliesmaterial bildet einen Vliesstoff, dessen Aufreißverhalten ähnlich sein kann wie beispielsweise bei einem Faserstofftuch oder dergleichen. Denkbare Materialien für den Vliesstoff sind Thermo(bond)-Vliese, ab einem Flächengewicht von ca. 15 g/m²; wasserstrahlverfestigte Vliese ab einem Flächengewicht von z. B. ca. 35 g/m²; und Nadelvliese ab einem Flächengewicht von z. B. ca. 60 bis ca. 250 g/m². Das Vliesmaterial hat in einem Ausführungsbeispiel eine Dicke von 15 bis 30 g/m²; beispielsweise ungefähr 20 g/m². Die Vliese können aus einem synthetischen Fasermaterial, z. B. aus PP, PE, PET, PA, PAN, Viskose, etc., hergestellt sein oder Mischfaservliese sein, z. B. PP-PE, PP-PET, PET-BicoPET, PET-Viskose, etc. Aufgrund der Kleberhaftung sind beispielsweise PET- oder Mischvliese gegenüber PP-Vliesen im Vorteil. Die Dicke des Vlieses kann in der Größenordnung von z. B. ca. 0,08 mn bis 0,5 mm oder 0,08 mm bis 0,2 mm, liegen und beispielsweise ungefähr 0,1 mm betragen.

Die Zwischenschicht kann grundsätzlich Naturfasern, Kunstfasern oder ein Gemisch aus Natur- und Kunstfasern aufweisen. Anstelle der Verwendung eines Vliesstoffes ist es auch denkbar, als Zwischenschicht eine sehr dünne Folie zu verwenden, die leicht aufgerissen werden kann.

In einer Ausgestaltung kann ferner eine Abstandsschicht zwischen dem Trägerbauteil und der Dekorschicht vorgesehen sein, wobei auch die Abstandsschicht eine lokale Schwächung entlang der Schwächungslinie aufweist. Wenn die Zwischenschicht zwischen der Dekorschicht und der Abstandsschicht liegt, kann die Zwischenschicht auch die Abstandsschicht stabilisieren und verhindern, dass die Abstandschicht im Bereich der Schwächungslinie einen wahrnehmbaren Spalt bildet. In dieser Ausgestaltung kann außerdem eine weitere (optionale) Zwischenschicht zwischen dem Trägerbauteil und der Abstandschicht liegen.

In einer Ausführung weist die Abstandsschicht ein Abstandsgewebe, -gestricke oder -gewirke auf. Alternativ ist es auch möglich, die Abstandsschicht beispielsweise als Schaumschicht zu bilden.

In einer Ausführung der Erfindung ist die Materialschwächung der Abstandsschicht so ausgebildet, dass diese zumindest abschnittsweise über ihre gesamte Dicke durchtrennt ist. Sie kann hierzu entlang der gesamten Schwächungslinie vollständig durchtrennt sein, oder zwischen einzelnen Schnitten können Stege verbleiben. In einer anderen Ausgestaltung kann die Abstandschicht in Form einzelner vorgefertigter Setzlinge aufgebracht werden.

Die Dekorschicht kann aus Leder oder einem lederähnlichen Material bestehen. Zu lederähnlichen Materialien zählen Materialien, die sich durch ähnliche Gebrauchseigenschaften und Einsatzmöglichkeiten wie echtes Leder auszeichnen. Sie können beispielsweise aus Lederresten oder -abfällen hergestellt sein oder auch in Form eines Kunstleders vorliegen. Die Dekorschicht kann auch aus Textil, einem Vlies, thermoplastischen oder duromeren Kunststoffen, z. B. in Form von Folien oder Häuten, oder Kombinationen dieser Materialien aufgebaut sein oder diese enthalten.

In einer Ausgestaltung der Erfindung ist die Materialschwächung der Dekorschicht durch einen oder mehrere Schnitte in die Unterseite der Dekorschicht gebildet, wobei diese Schnitte die Dekorschicht nur durch ein Teil ihrer Dicke durchtrennen, beispielsweise zu etwa 2/3. In einer Ausgestaltung kann eine Restmaterialstärke von 0,4 bis 0,5 mm verbleiben. Es ist auch denkbar, die Dekorschicht durch eine andere Art der Schwächung, wie Schärfen oder Schleifen, zu bearbeiten.

In einer Ausgestaltung der Erfindung ist auf das Trägerbauteil eine Schaumschicht aufgebracht, über der eine Kunststoffhaut liegt, wobei die Dekorschicht oder die Abstandsschicht dann unmittelbar oder mittelbar auf die Kunststoffhaut aufgebracht ist. In dieser Ausgestaltung sollten auch die Schaumschicht und die Kunststoffhaut eine lokale Materialschwächung im Bereich der Schwächungslinie aufweisen. Diese Materialschwächung kann so ausgebildet sein, dass das Trägerbauteil und die Kunststoffhaut zumindest abschnittsweise über ihre ganze Dicke durchtrennt sind, während die Schaumschicht von der Seite des Trägerbauteils nur durch ein Teil ihrer Dicke durchtrennt ist.

Diese zuletzt genannte Ausgestaltung eignet sich besonders für solche Anwendungsformen, in denen das Trägerbauteil eine Oberflächenstruktur, z. B. mit Sicken und Rippen aufweist, die nicht der gewünschten Oberflächengestaltung des Innenverkleidungsteils entspricht. Die Kunststoffhaut kann dann, z. B. als Slush-Haut, so ausgebildet werden, dass ihre Gestalt im Wesentlichen der gewünschten Oberflächengestalt der Innenverkleidung entspricht, und der Zwischenraum zwischen Trägerbauteil und Kunststoffhaut kann ausgeschäumt werden, wobei die so gebildete Schaumschicht über der Fläche des Innenverkleidungsteils ungleich stark ist und die Unterschiede in der Oberflächengestalt von Trägerbauteil und Kunststoffhaut ausgleicht.

Die Zwischenschicht kann als ein Streifen nur im Bereich der Schwächungslinie oder vollflächig zwischen Dekorschicht und Abstandsschicht oder zwischen Dekorschicht und Trägerbauteil vorgesehen sein. Sie verbirgt die Schwächungslinie, so dass diese von außen optisch und haptisch nicht wahrnehmbar ist. Dieses Verbergen der Schwächung der Abstandsschicht und der Dekorschicht ist besonders relevant bei Innenverkleidungen, die bereits einen gewissen Alterungsprozess durchlaufen haben, wobei sich entlang der Schwächungslinie in der Abstandsschicht und der Dekorschicht ein Spalt bilden kann. Dies ist dann besonders gravierend, wenn eine Abstandsschicht und als Abstandsschicht z. B. ein Gewirke, Gestricke oder Gewebe verwendet wird, das im Bereich der Schwächungslinie vollständig durchtrennt ist.

Es ist auch möglich, die Zwischenschicht aus zwei oder mehr Lagen aufzubauen, z. B. aus zwei Vlieslagen gleicher oder unterschiedlicher Beschaffenheit, aus einem Vliesstoff in Kombination mit einer Folie oder dergleichen. Eine der Lagen könnte direkt auf die Unterseite der Dekorschicht aufgebracht werden, um einen oder mehrere Schnitte, welche die Schwächung bilden können, zusammenzuhalten. Eine zweite Lage kann direkt auf das Trägerbauteil oder die Abstandschicht aufgebracht werden, bevor Dekorschicht und Trägerbauteil oder Dekorschicht und Abstandsschicht verbunden werden.

Das oben beispielhaft beschriebene Innenverkleidungsteils kann hergestellt werden, indem eine Tragschicht bereitgestellt wird, die Tragschicht mit einem Kleber beschichtet wird, um eine Zwischenschicht mit einer Kleberschicht auf jeder Seite der Tragschicht auszubilden, und dann ein Sandwichaufbau aus Trägerbauteil, Abstandsschicht und Dekorschicht hergestellt wird, wobei die Abstandsschicht und die Dekorschicht durch die Zwischenschicht miteinander verklebt werden.

Spezieller kann das Verfahren beispielsweise folgende Verfahrensschritte umfassen: zunächst wird ein Trägerbauteil geformt, beispielweise durch Spritzgießen eines Kunststoffträgers oder durch Pressen und Verformen eines Faserverbundmaterials. Das Trägerbauteil wird beispielsweise durch Schneiden oder Fräsen einer Nut geschwächt, um eine Schwächungslinie zu bilden. Diese Nut kann das Trägerbauteil zumindest abschnittsweise durch seine gesamte Dicke hindurch durchtrennen. Eine Abstandsschicht wird mittelbar oder unmittelbar über dem Trägerbauteil aufgebracht, wobei die Abstandsschicht im Bereich der Schwächungslinie geschwächt, insbesondere abschnittsweise oder durchgehend unterbrochen ist. Eine Dekorschicht wird auf die Abstandsschicht aufgebracht, z. B. aufkaschiert oder aufgeklebt, wobei auch die Dekorschicht eine Strukturschwächung im Bereich der Schwächungslinie aufweist. Erfindungsgemäß wird vor oder während des Aufbringens der Dekorschicht die Zwischenschicht zwischen die Dekorschicht und die Abstandsschicht eingebracht. Die Zwischenschicht kann zunächst auf die Abstandsschicht aufgelegt werden, bevor die Dekorschicht aufkaschiert wird. Es ist auch möglich, die Zwischenschicht zunächst mit der bereits mit der Strukturschwächung versehenen Dekorschicht zu verbinden und dann die Dekorschicht zusammen mit der Zwischenschicht auf die Abstandsschicht aufzubringen. Auch eine mehrlagige Zwischenschicht kann verwendet werden, die zwischen Dekorschicht und Abstandsschicht eingelegt oder insgesamt oder mit ihren einzelnen Lagen zunächst mit der Dekorschicht und/oder der Abstandsschicht verbunden wird.

Das oben beschriebene Verfahren geht davon aus, dass eine Abstandsschicht vorhanden ist. Diese kann auch entfallen oder durch andere Schichten ersetzt oder ergänzt werden. Die Zwischenschicht kann als Haftschicht ausgebildet werden, indem eine perforierte Tragschicht ein- oder beidseitig mit Kleber beschichtet oder getränkt wird.

In einem Ausführungsbeispiel wird zur Ausbildung des Innenverkleidungsteils zusätzlich eine Kunststoffhaut ausgeformt, die der gewünschten Oberflächengestalt des Innenverkleidungsteils weitgehend entspricht. Es kann beispielsweise eine Slush-Haut sein. Dann werden das geformte Trägerbauteil und die Kunststoffhaut in ein Formwerkzeug eingelegt, und eine in dem Formwerkzeug zwischen dem Trägerbauteil und der Kunststoffhaut gebildeten Kavität wird mit einem Schaummaterial ausgeschäumt. Die Kunststoffhaut kann durch einen oder mehrere Schnitte zur Bildung einer Aufreißlinie geschwächt werden, und der Verbund aus dem Trägerbauteil und der an das Trägerbauteil angeformten Schaumschicht kann z. B. durch Schneiden oder Fräsen einer Nut ausgehend von der Seite des Trägerbauteils geschwächt werden. Diese Nut kann sich zumindest abschnittsweise durch die gesamte Dicke des Trägerbauteils und durch einen Teil der Dicke der Schaumschicht erstrecken. Anschließend kann die Dekorschicht und gegebenenfalls die Abstandsschicht sowie die Zwischenschicht wie oben beschrieben auf die Kunststoffhaut aufgebracht werden, z. B. durch Aufkleben.

Die Erfindung ist im Folgenden anhand von Ausführungsbeispielen mit Bezug auf die Figuren näher erläutert. In den Figuren zeigen:
- Fig. 1: eine schematische Schnittdarstellung durch einen Innenverkleidungsteil gemäß einer Ausführung der Erfindung;
- Fig. 2: eine Draufsicht auf eine Zwischenschicht gemäß einer Ausgestaltung der Erfindung;
- Fig. 3: eine Draufsicht auf eine Zwischenschicht gemäß einer alternativen Ausgestaltung;
- Fig. 4 bis 9: schematische Teilschnittdarstellungen durch verschiedene Ausgestaltungen von Innenverkleidungsteilen gemäß der Erfindung; und
- Fig. 10: ein Flussdiagramm, welches ein beispielhaftes Verfahren zum Herstellen eines Innenverlcleidungsteils nach Figuren 1 bis 9 repräsentiert.

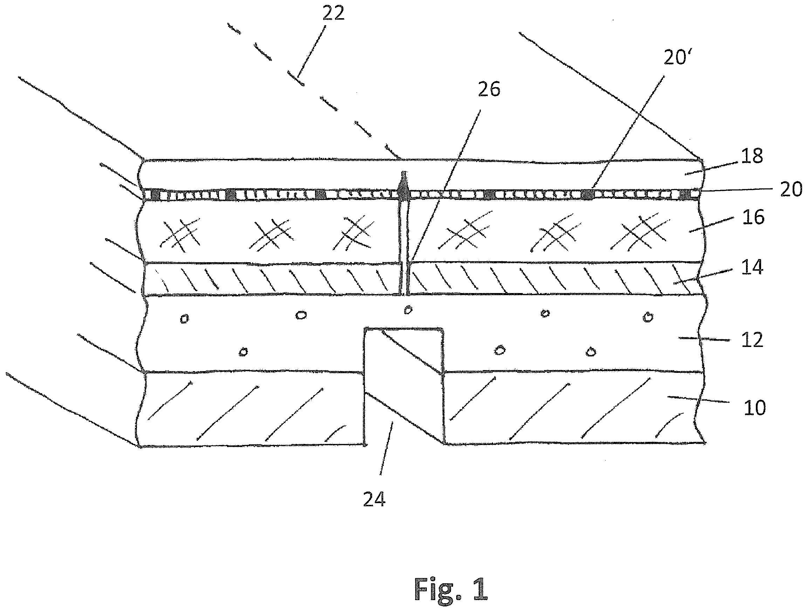

Fig. 1 zeigt in schematischer Schnittdarstellung einen möglichen Aufbau des erfindungsgemäßen Innenverkleidungsteils. In diesem Ausführungsbeispiel umfasst das Innenverkleidungsteil ein Trägerbauteil 10, eine Schaumschicht 12, eine Kunststoffhaut 14, eine Abstandsschicht 16 und eine Dekorschicht 18. Zwischen Abstandsschicht 16 und Dekorschicht 18 liegt eine Zwischenschicht 20.

Das Trägerbauteil 10 kann ein Spritzgussteil, z. B. aus Polypropylen, ABS oder jedem anderen geeigneten Kunststoff sein, das optional Fasern, z. B. Glas- oder Kohlefasern, enthält. Es kann auch aus einer Fasermatte durch Erwärmen, Pressen und Verformen gebildet sein. Jedes Trägermaterial, das sich für den beabsichtigten Anwendungszweck, beispielsweise als Instrumententafel eines Kraftfahrzeugs eignet, kann verwendet werden.

Die Kunststoffhaut 14 ist beispielsweise eine Slush-Haut aus PVC, PPO oder einem anderen Kunststoff, die vorab und separat geformt wird. Die Kunststoffhaut 15 ist im Verhältnis zum Trägerbauteil dehnbar. Sie hat beispielsweise eine Dicke im Bereich von 0,8 bis 1,4 mm. Vorzugsweise ist die Kunststoffhaut 14 so geformt, dass sie der gewünschten Oberflächengestalt des Innenverkleidungsteils weitgehend entspricht.

Die zwischen dem Trägerbauteil 10 und der Kunststoffhaut 14 liegende Schaumschicht 12 kann beispielsweise aus Polyurethan (PUR) durch Ausschäumen des Raums zwischen dem Trägerbauteil 10 und der Kunststoffhaut 14 gebildet werden. Die Schaumschicht 12 kann über ihrer Fläche eine ungleichmäßige Dicke im Bereich von z. B. 0 bis 10 mm haben, um unterschiedliche Oberflächenstrukturen vom Trägerbauteil 10 und Kunststoffhaut 14 auszugleichen. Dadurch ist es möglich, die Kunststoffhaut 14 so zu bilden, dass sie im Wesentlichen die Gestalt der Sichtfläche 10 des Verkleidungsteils abbildet, während das Trägerbauteil unabhängig hiervon mit Sicken, Rippen und anderen Komponenten, die von der Sichtseite hin nicht wahrnehmbar sein sollen, ausgebildet werden kann. Die Härte der Schaumschicht 12 liegt z. B. im Bereich von 55 Shore A bis 75 Shore A.

An die Kunststoffhaut 14 schließt sich die Abstandsschicht 16 an, die aus einem Gewirke, Gestricke oder Gewebe gebildet sein kann, das mit der Kunststoffhaut 14 verklebt ist.

Auf die Abstandsschicht 16 wird die Deckschicht 18 aufkaschiert oder aufgeklebt. Diese besteht z. B. aus Leder oder einem lederähnlichen Material. Zu lederähnlichen Materialien zählen Materialien, die sich durch ähnliche Gebrauchseigenschaften und Einsatzmöglichkeiten wie echtes Leder auszeichnen. Sie können beispielsweise aus Lederresten oder -abfällen hergestellt sein und umfassen z. B. Kunstleder, Alcantara und Lederverbundmaterial. Die Dekorschicht kann auch aus Textil, einem Vlies, thermoplastischen oder duromeren Kunststoffen, z. B. in Form von Folien oder Häuten, oder Kombinationen dieser Materialien aufgebaut sein oder diese enthalten.

Die Zwischenschicht 20 ist zwischen die Deckschicht 18 und die Abstandschicht 16 eingefügt ist. Sie ist vorzugsweise über der gesamten Fläche oder über einen größeren Teil der Fläche des Innenverkleidungsteils, z. B. über einer vollständigen Airbagabdeckung vorgesehen. Die Zwischenschicht 20 umfasst in einer Ausführung ein Vliesmaterial und ist als Vliesstoff ausgebildet, der mit der Abstandsschicht 14 und der Dekorschicht 18 verklebt wird. In einem Ausführungsbeispiel wurde ein Thermobond-Vlies mit einem Flächengewicht von 20g/m² aus PET getestet. Vliese mit einer Dicke im Bereich von ca. 0,1 mm bis 0,2 mm haben sich in der Praxis als brauchbar erwiesen, ohne dass die Erfindung hierauf beschränkt sein sollte. Aufgrund der Kleberhaftung sind beispielsweise PET- oder Mischvliese gegenüber PP-Vliesen im Vorteil. Anstelle eines einlagigen Vliesstoffes kann auch eine Zwischenschicht 20 aus zwei oder mehr Lagen aufzubauen, z. B. aus zwei Vlieslagen gleicher oder unterschiedlicher Materialien und Beschaffenheit, aus einem Vliesstoff in Kombination mit einer Folie oder dergleichen.

Die Zwischenschicht 20 kann als Haftschicht dienen, indem eine Vlies-Tragschicht beidseitig mit Kleber beschichtet wird, z. B. durch Rollen, Sprühen, Rakeln oder Tauchen, wobei der Kleberauftrag genau bemessen werden kann, z. B. als Zwischenschicht = [Tragschicht + Kleber (abgelüftet)] g/m² mit einem Kleberanteil von ca. 120 g/m² und einem Flächengewicht der Tragschicht von 15 bis 30 g/m², z. B. ca. 20 g/m².

Eine Aufreißlinie oder Schwächungslinie 22 kann in dem in Fig. 1 gezeigten Innenverkleidungsteil wie folgt hergestellt werden: nachdem zunächst der Verbund aus dem Trägerbauteil 10, der Schaumschicht 12 und der Kunststoffhaut 16 gebildet ist, wird von der Seite des Trägerbauteils 10 aus einer Nut 24 durch das Trägerbauteil 10 und einem Teil der Schaumschicht 11 gefräst, wobei diese Nut durchgehend oder in Abschnitten, mit dazwischen verbleibenden Stegen, ausgebildet sein kann. Des Weiteren wird die Kunststoffschicht 14 durch einen kontinuierlichen Schnitt oder mehrere kleine Schnitte oder punktförmige Perforationen 26 oder dergleichen im Bereich der Aufreißlinie 22 geschwächt, wobei diese Schnitte durch Laserschneiden, Messerschneiden, Wasserstrahlschneiden, etc., gebildet werden können und auch in das Material der Schaumschicht 12 eindringen können.

Anschließend wird die Abstandsschicht 16 aufgebracht, wobei diese in Form einzelner Setzlinge des Gewebes, Gestrickes oder Gewirkes vorgesehen werden kann, d.h. in separaten, vollständig voneinander getrennten Teilen, die z. B. über der Airbagabdeckung und außerhalb der Airbagabdeckung angeordnet sind. Die Abstandsschicht 16 muss dann nicht mehr geschnitten werden, weil sie bereits in getrennten Teilen eingesetzt wird.

Die Dekorschicht 18 wird vor dem Aufbringen auf das Innenverkleidungsteil von ihrer Rückseite her entlang der Aufreißlinie geschwächt, beispielsweise kontinuierlich oder diskontinuierlich eingeritzt, wobei diese Schwächung geradlinig, in Form einer Welle, einer ZickzackLinie etc. ausgebildet sein kann. Die Schwächung kann außer durch Schneiden auch z. B. durch Schärfen oder Schleifen erfolgen. Eine Materialreststärke von beispielsweise 0,45 mm sollte verbleiben.

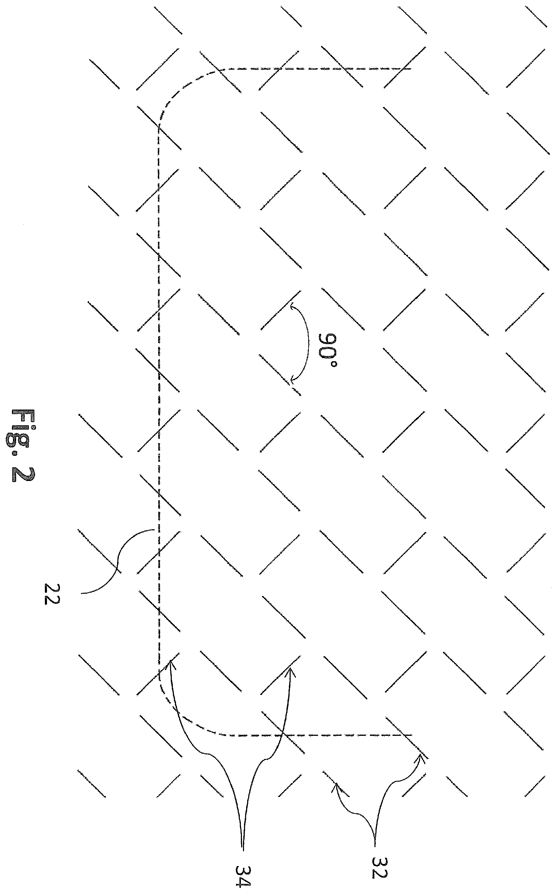

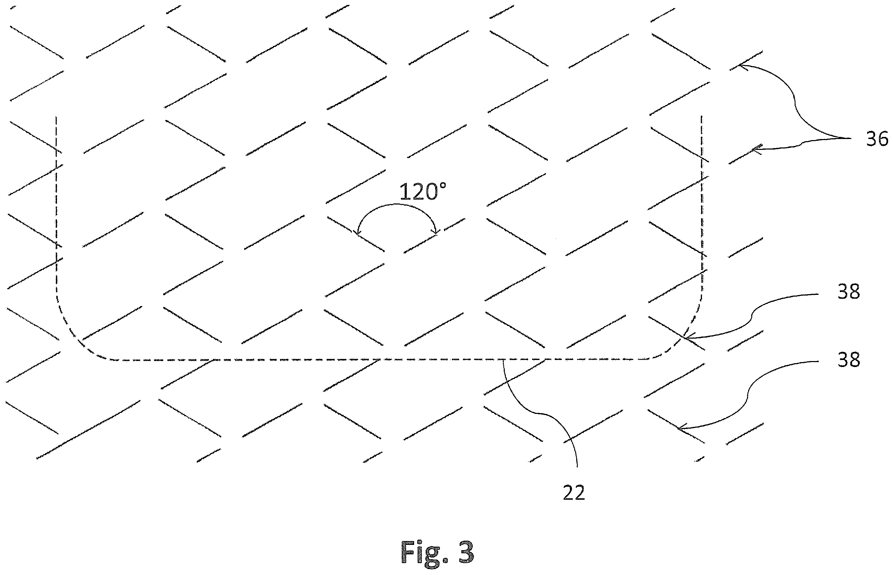

Die Zwischenschicht 20 weist eine Perforierung 20' auf, die mit Bezug auf Fig. 2 und 3 näher erläutert ist.

Die Zwischenschicht 20 kann vollflächig über der Abstandsschicht 16 oder nur im Bereich der Airbagabdeckung vorgesehen sein, und die Dekorschicht 18 wird, unter Zwischenschaltung der Zwischenschicht 20, auf die Abstandsschicht 16 aufkaschiert. Bei Verwendung einer mehrlagigen Zwischenschicht 20 kann eine der Lagen direkt auf die Unterseite der Dekorschicht 18 aufgebracht werden, um einen oder mehrere Schnitte, welche die Schwächung bilden können, zusammenzuhalten. Eine zweite Lage kann direkt auf die Abstandsschicht 16 aufgebracht werden, bevor Dekorschicht und Abstandsschicht verbunden werden.

Die Zwischenschicht 20 sorgt dafür, dass die angrenzende Materialschwächung in der Kunststoffhaut 14 und/oder der Abstandsschicht 16 von der Dekorseite her nicht wahrnehmbar ist, und zwar weder optisch noch haptisch. Zusätzlich stabilisiert sie auch den Schwächungsschnitt in der Dekorschicht 18, so dass dieser auch bei Streckung z. B. durch Wärmeeintrag und bei Alterung auf der Sichtseite der Dekorschicht nicht wahrnehmbar wird. Andererseits ist die Zwischenschicht 20 durch die spezielle Perforierung so beschaffen, dass ihr Material bei Stoßbelastung gegen die Schwächungslinie 22, namentlich bei Auslösen eines Airbags, leicht mit aufreißt und dem Aufbrechen der Innenverkleidung keinen nennenswerten Widerstand entgegensetzt.

In dem gezeigten Ausführungsbeispiel kann das Trägerbauteil eine Dicke in der Größenordnung von z. B. 1 bis 5 mm, spezieller 2 bis 3 mm haben. In einem Ausführungsbeispiel liegt die Stärke des Trägerbauteils 10 in der Größenordnung von z. B. 2,5 mm, ist aber in der Praxis natürlich abhängig von Material und Verwendungszweck. Die Schaumschicht hat, wie oben dargelegt, über der Fläche des Innenverkleidungsteils in der Regel eine variierende Dicke, im Bereich von 0 bis z. B. 8 oder 10 mm. Die Kunststoffhaut 14 kann eine Dicke in der Größenordnung von 1 mm haben, in einem Ausführungsbeispiel ist sie ungefähr 1,2 mm stark. Die Abstandsschicht 16 hat ihrerseits eine Dicke in der Größenordnung von etwa 1,5 bis 5 mm, beispielsweise etwa 3 mm. Die Dekorschicht 18 umfasst z. B. eine Lederschicht oder lederähnliche Schicht mit einer Dicke im Bereich von z. B. 0,8 bis 1,5 mm, in einem Ausführungsbeispiel ist sie etwa 1,2 mm stark. Die Zwischenschicht 20 hat eine geringe Dicke in der Größenordnung von etwa 0,1 bis 0,5 mm oder sogar nur 0,1 bis 0,2 mm.

Die Fig. 2 und 3 zeigen zwei Draufsichten auf verschiedene Ausgestaltungen der Zwischenschicht 20 mit unterschiedlichen Perforierungen. In Fig. 2 ist in der Zwischenschicht 20 eine Perforierung in zwei Gruppen von Perforationslinien 32, 34 ausgebildet, die zueinander senkrecht stehen. Jede Gruppe von Perforationslinien 32, 34 umfasst mehrere parallele Perforationslinien, entlang derer einzelne Perforationsöffnungen oder Perforierungsschnitte ausgebildet sind. In einem Ausführungsbeispiel können die einzelnen Schnitte oder Perforationsöffnungen 5 mm bis 50 mm, z. B. ungefähr 25 mm lang sein und einen Abstand zwischen den Schnittenden von 5 mm bis 50 mm oder 5 mm bis 20 mm oder ungefähr 10 mm, 12 mm oder 15 mm haben. Der Abstand der parallelen Perforationslinien kann z. B. in der Größenordnung von 10 mm bis 70 mm liegen, z. B. bei ungefähr 33 mm. Es kann auch nur eine Gruppe von Perforationslinien vorgesehen sein, beispielsweise die Perforationslinien 32 in Fig. 2. Die zweite Gruppe von Perforationslinien 34 kann, wie in Fig. 2 gezeigt, Perforierungen aufweisen, die einen größeren Abstand zwischen den Schnittenden haben, und die einzelnen Perforationsöffnungen benachbarter Perforationslinien können zueinander versetzt sein, wie ebenfalls in Fig. 2 gezeigt. Die Perforationsöffnungen auf den sich kreuzenden Perforationslinien sollten einander nicht schneiden oder berühren, um die Stabilität der Zwischenschicht 20 nicht zu stark zu beeinträchtigen.

Grundsätzlich gilt, dass mehrere Perforationsöffnungen entlang mehrerer Perforationslinien vorgesehen werden können. Es kann eine Gruppe in sich paralleler Perforationslinien vorgesehen sein, oder zwei oder mehr Gruppen solcher in sich paralleler Perforationslinien, die in einem Winkel zueinander angeordnet sind. Die Perforationsöffnungen der Gruppen von Perforationslinien können unterschiedliche Längen und Abstände haben. Die Länge der einzelnen Perforationsöffnungen in einer Gruppe von Perforationslinien ist auch abhängig vom Abstand der Perforationslinien der anderen Gruppe. So können die Perforationsöffnungen, wie in Fig. 2 und 3 gezeigt, ein Raster aus Rechtecken oder Rauten definieren, wobei einzelne Perforationsöffnungen entlang der Seitenkanten der Rechtecke oder Rauten verlaufen, ohne sich in den Schnittpunkten zu berühren, und wobei auch einzelne Seitenkanten, in regelmäßigem oder unregelmäßigem Muster, keine Perforationsöffnungen aufweisen können.
Die Gruppen von Perforationslinien 32, 34 sind so angeordnet, dass sich in der Zwischenschicht 20 Perforierungen ergeben, welche die Schwächungslinie 22 kreuzen oder tangieren. Dadurch wird das Öffnungsverhalten beim Auslösen des Airbags nicht behindert, weil die einzelnen Perforierungen in der Zwischenschicht 20 einen oder mehrere Initialrisse erzeugen. Gleichzeitig wirkt die Zwischenschicht 20 für die darüber liegende Dekorschicht und für die darunter liegende Abstandsschicht stabilisierend und kann Zugkräfte, die parallel zur Dekorschicht und senkrecht zur Schwächungslinie 22 wirken, aufnehmen und dadurch der Tendenz entgegenwirken, dass die Dekorschicht und/oder die Abstandsschicht im Bereich der Schwächungslinie einen wahrnehmbaren Spalt bilden.

Die Perforierungen müssen weder gleich groß sein, noch gleichmäßig angeordnet sein, noch müssen sie über der gesamten Fläche der Zwischenschicht 20 vorgesehen sein, solange sie so angeordnet sind, dass wenigstens einige Perforierungen die Schwächungslinie 22 kreuzen und die Zwischenschicht 20 Zugkräfte aufnehmen kann, die senkrecht zur Schwächungslinie 22 verlaufen, und damit der Tendenz entgegenwirken kann, dass in der Dekorschicht und/oder der Abstandsschicht im Bereich der Schwächungslinie ein sich aufweitender Spalt entsteht.

Eine alternative Ausgestaltung von zwei Gruppen von Perforationslinien 36, 38 ist in Fig. 3 dargestellt. In diesem Ausführungsbeispiel weisen die Schwächungslinien 36, 38 ähnlich angeordnete Perforationslinien wie in Fig. 2 auf, sie sind jedoch in einem Winkel von 120 ° relativ zueinander angeordnet. Dadurch ergeben sich unterschiedliche Schnittwinkel zwischen den Perforationslinien 36, 38 und der Längskante bzw. den Seitenkanten der Airbagabdeckung entlang der Aufreißlinie 22. Durch unterschiedliche Neigungswinkel zwischen den Gruppen von Perforationslinien 32, 34 bzw. 36, 38 kann die Zugkraft eingestellt werden, die die Zwischenschicht 20 aufnehmen kann. Weitere Faktoren sind selbstverständlich die Anzahl, Länge und Abstand der einzelnen Perforationsöffnungen.

Wie oben dargelegt, wird in einer bevorzugten Ausführungsform der Erfindung die Zwischenschicht 20 aus einer flächig mit Kleber beschichteten Tragschicht aufgebaut und dient somit gleichzeitig als eine Haftschicht zwischen Dekorschicht und Tragbauteil oder Dekorschicht und Abstandsschicht, wobei gegebenenfalls weitere Strukturschichten eingefügt sein können. Dies erlaubt eine wirtschaftlichere Kleberbeschichtung als das Beschichten eines konturierten Trägerteils und einer Dekorschicht und/oder Abstandsschicht mit Kleber. Da die Dekorschicht und die Abstandsschicht oder die Trägerschicht nicht mit Kleber beschichtet werden müssen, kann ferner die Gefahr reduziert werden, dass durch Einlaufen von nassem Kleber die Schwächungslinie wieder verklebt und dadurch das Öffnungsverhalten des Airbags negativ beeinflusst wird.

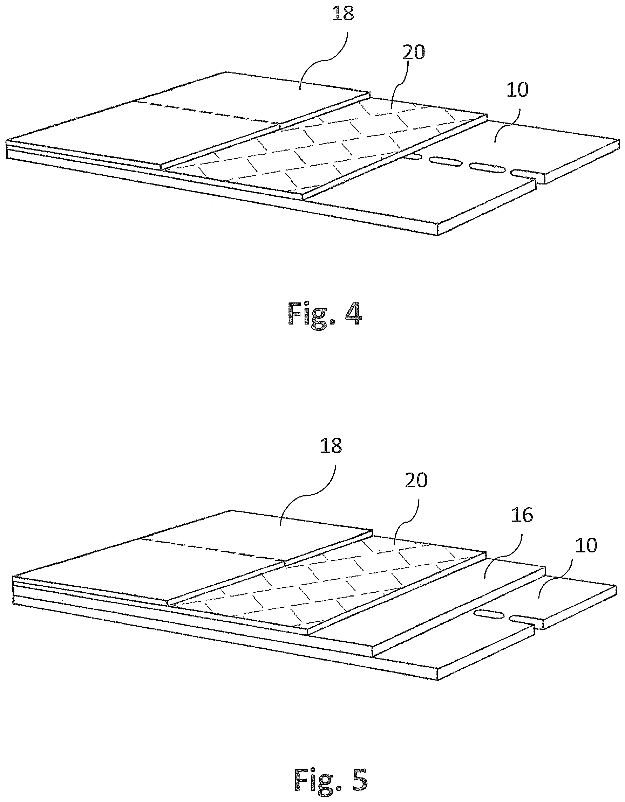

Die Fig. 4 bis 9 zeigen verschiedene Ausgestaltungen des Innenverkleidungsteils, das, wie in Fig. 4 gezeigt, wenigstens das Trägerbauteil 10, die Zwischenschicht 20 und die Dekorschicht 18 umfasst.

In der Ausgestaltung der Fig. 5 umfasst das Innenverkleidungsteil das Trägerbauteil 10, auf das eine Abstandsschicht 16 aufgebracht ist, und eine Dekorschicht 18, die mit der Abstandsschicht 16 über die Zwischenschicht 20 verbunden ist.

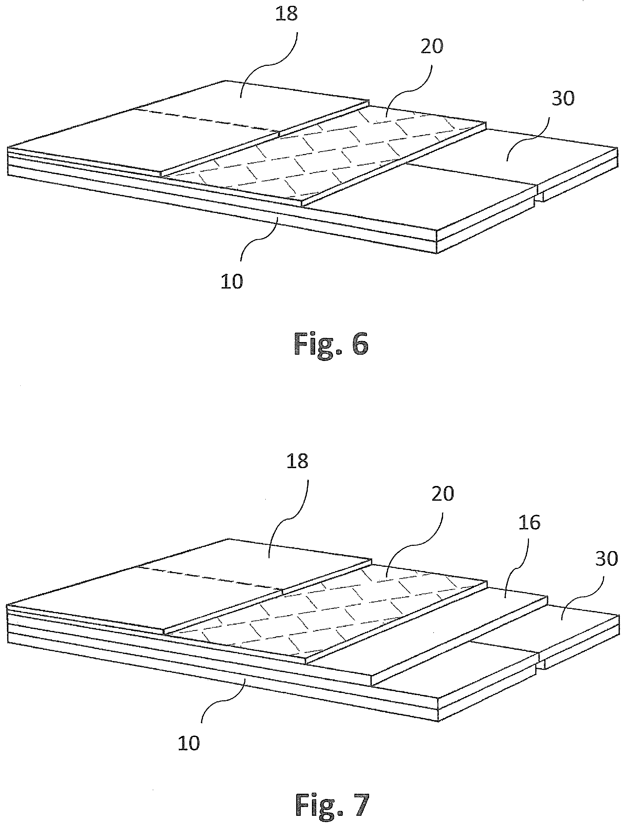

In der Ausgestaltung der Fig. 6 umfasst das Innenverkleidungsteil ein Trägerbauteil 10, auf das eine Folie oder Schaumfolie 30 aufkaschiert ist, und eine Dekorschicht 18, die mit der Folie 30 über die Zwischenschicht 20 verbunden ist.

In der Ausgestaltung der Fig. 7 umfasst das Innenverkleidungsteil ein Trägerbauteil 10, auf das eine Folie oder Schaumfolie 30 aufkaschiert ist. Auf die Folie 30 ist ein Abstandsgewirke 16 aufgebracht. Die Dekorschicht 18 ist mit der Abstandsschicht 16 über die Zwischenschicht 20 verbunden.

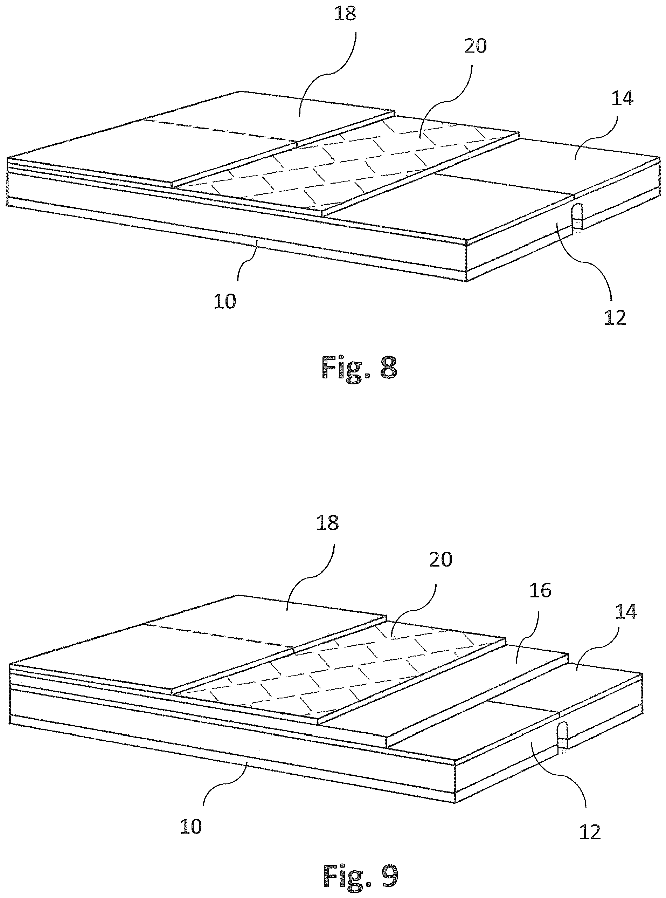

In der Ausgestaltung der Fig. 8 umfasst das Innenverkleidungsteil ein Trägerbauteil 10, auf das eine Strukturschicht 12, 14 aufgebracht ist. Diese kann eine Slush-, Sprüh-, oder thermogeformte Haut 14 aufweisen, wobei eine Schaumschicht zwischen das Trägerbauteil 10 und die Haut 14 eingebracht ist, wie oben beispielsweise beschrieben. Eine Dekorschicht 18 ist über die Zwischenschicht 20 auf die Haut 14 aufgebracht.

Die Ausgestaltung der Fig. 9 entspricht im Wesentlichen dem Aufbau der Fig. 1, mit einem Trägerbauteil 10, einer Schaumschicht 12, einer Kunststoffhaut 14, einer Abstandsschicht 16, der Zwischenschicht 20 und einer Dekorschicht 18. Grundsätzlich gilt für alle Komponenten der in den Fig. 4 bis 9 gezeigten Ausgestaltungen das oben gesagte, beispielsweise hinsichtlich ihrer Materialien, Dicke und Herstellungsverfahren. Die einzelne Lagen können durch Verkleben, Kaschieren und, soweit der Aufbau von Trägerbauteil und zusätzlicher Strukturschicht betroffen ist, auch durch Hinterspritzen hergestellt sein. Die Zwischenschicht 20 kann grundsätzlich flächig auf das Trägerbauteil 10, oder die Folie 30, oder die Haut 14 oder die Abstandsschicht 16 aufgebracht werden. Sie sollte jedenfalls im Bereich einer Airbagabdeckung, insbesondere über der Schwächungslinie vorgesehen sein, um Zugkräfte aufzunehmen, die sich im Bereich der Schwächungslinie ergeben. Die Zwischenschicht wird mit der Dekorschicht und der darunterliegenden Schicht verklebt.

Die Dekorschicht wird vor dem Aufbringen auf das Innenverkleidungsteil von ihrer Rückseite her entlang der Schwächungslinie geschwächt, beispielsweise kontinuierlich oder diskontinuierlich eingeritzt oder eingeschnitten. Die Schwächungslinie kann geradlinig sein oder die Form einer Welle, einer Zickzacklinie oder dergleichen haben. Die Schwächung kann z. B. auch durch Schneiden, Schärfen oder Schleifen erfolgen.

Bei Verwendung einer mehrlagigen Zwischenschicht 20 kann eine der Lagen direkt auf die Unterseite der Dekorschicht 18 aufgebracht werden, um eine oder mehrere Schnitte, welche die Schwächung bilden, zusammenzuhalten. Eine zweite Lage kann direkt auf die Abstandsschicht 16 oder eine andere darunterliegende Schicht aufgebracht werden, bevor die Dekorschicht und die darunterliegenden Schicht verbunden werden.

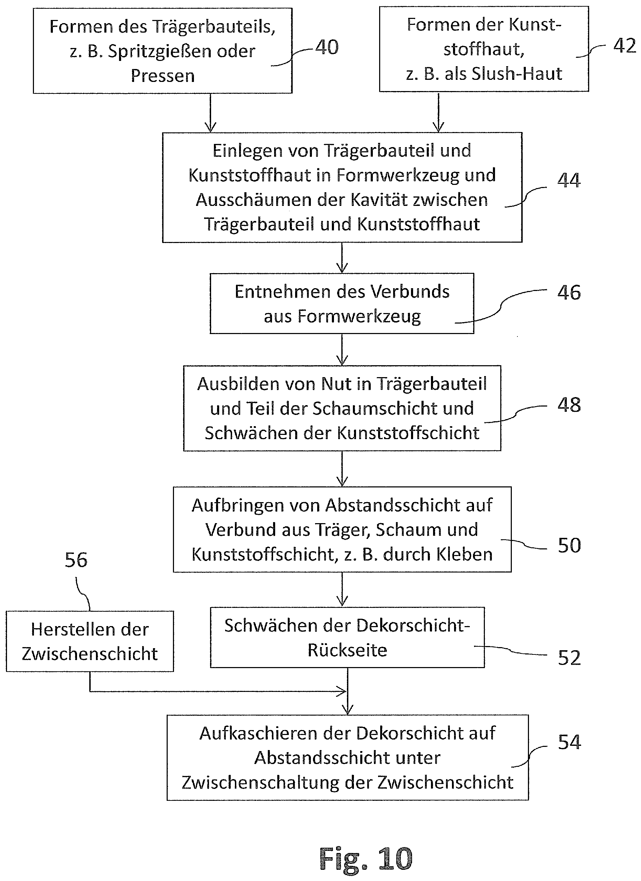

Ein beispielhaftes Verfahren zur Herstellung eines Innenverkleidungsteils, wie es in den Fig. 1 und 9 dargestellt ist, ist im Folgenden mit Bezug auf Fig. 10 erläutert.

Zur Herstellung des Innenverkleidungsteils wird zunächst das Trägerbauteil 10 geformt, beispielsweise durch Spritzgießen oder Pressen einer Faserplatte, wobei alle gängigen Materialien, wie PP, ABS, etc., einschließlich Faseranteilen, Natur-Kunststofffasermatten, etc., verwendet werden können (Schritt 40). Ferner wird die Kunststoffhaut 14, beispielsweise durch einen an sich bekannten Slush-Haut-Formungsprozess gebildet. Die Haut kann beispielsweise aus PVC oder PPO gefertigt werden und eine Dicke in der Größenordnung von 0,8 bis 1,4 mm haben (Schritt 42). Das Trägerbauteil 10 und die Kunststoffhaut 14 werden in ein Formwerkzeug (nicht gezeigt) eingelegt, wobei die Kunststoffhaut als eine Art Schale zum Aufnehmen eines Schaummaterials dienen kann. Die Form wird geschlossen, und die Kavität zwischen Trägerbauteil und Kunststoffhaut wird ausgeschäumt, um einen Verbund aus Träger, Schaum und Kunststoffschicht zu bilden (Schritt 44). In der Praxis kommt z. B. ein PUR-Schaum zum Einsatz, um eine Schaumschicht mit einer Härte in der Größenordnung von 55 bis 75 Shore A herzustellen.

Dieser Verbund wird aus dem Formwerkzeug entnommen (Schritt 46), und zur Herstellung der Schwächungslinie wird eine Nut in das Trägerbauteil und ein Teil der Schaumschicht geschnitten, beispielsweise gefräst. Die Kunststoffschicht kann von ihrer Oberseite her beispielsweise durch Schneiden oder Ritzen geschwächt werden, wobei hier ein durchgehender Schnitt, einzelne Schnitte, punktförmige Perforationen oder dergleichen gewählt werden können (Schritt 48).

Anschließend wird die Abstandsschicht 16 auf den Verbund aus Träger, Schaum und Kunststoffhaut aufgebracht, beispielsweise aufgeklebt, wobei diese Abstandsschicht im Bereich der Schwächungslinie unterbrochen ist (Schritt 50). Als Abstandschicht kann z. B. ein Gewirke, Gestricke oder Gewebe, aber auch eine Schaumschicht verwendet werden. Es ist möglich, im Voraus durch Stanzen hergestellte einzelne Setzlinge auf den Verbund aufzubringen. Dies kann einfacher sein, als eine durchgehende Abstandsschicht aufzubringen und anschließend zu schneiden.

Die Zwischenschicht 20 wird aus einer Vliesmateriallage mit einer Dicke von etwa 0,1 mm hergestellt, die beidseits mit einem Kleber beschichtet sein kann (Schritt 56). Hierzu kann z. B. ein Thermobond-Vlies zum Einsatz kommen. Die Vliesmateriallage wird mit Perforierungen versehen, die wie in Fig. 2 oder in Fig. 3 gezeigt ausgestaltet sein können.

Die vorab im Bereich der Aufreißlinie mit einer Schwächung auf ihrer Rückseite versehene Dekorschicht (Schritt 52) wird auf die Abstandsschicht aufkaschiert, wobei die Zwischenschicht 20 als Haftschicht eingelegt wird. Die Zwischenschicht 20 kann vorab mit der Abstandsschicht 16 oder der Dekorschicht 18 oder bei Verwendung einer mehrlagigen Zwischenschicht 20 auch mit der Abstandsschicht 16 und der Dekorschicht 18 verklebt werden oder beim Aufkaschieren der Dekorschicht 18 auf die Abstandsschicht 16 mit diesen beiden Schichten verbunden werden.

## Patentansprüche

1. Innenverkleidungsteil mit
einem Trägerbauteil (10) und
einer Dekorschicht (18),
wobei das Trägerbauteil (10) und die Dekorschicht (18) jeweils eine lokale Schwächung (24,26) entlang einer Schwächungslinie (22) aufweisen, die ein kontrolliertes Aufreißen des Innenverkleidungsteils erlaubt, wenn eine vorgegebene Kraft auf das Trägerbauteil (10) ausgeübt wird, und mit
einer Zwischenschicht (20) zwischen dem Trägerbauteil (10) und der Dekorschicht (18), wobei die Zwischenschicht (20) mit der Dekorschicht (18) verklebt ist, **dadurch gekennzeichnet, dass** die Zwischenschicht (20) eine Zwischenschicht-Schwächung aufweist, welche die Schwächungslinie (22) kreuzt.

2. Innenverkleidungsteil nach Anspruch 1, wobei die Zwischenschicht-Schwächung entlang mehrerer paralleler oder im Wesentlichen paralleler Perforationslinien (32, 34) angeordnet ist, die schräg zu der Schwächungslinie (22) verlaufen, in einem Winkel ungleich 90 Grad, insbesondere in einem Winkel von 20 Grad bis 70 Grad, vorzugsweise von 30 Grad bis 60 Grad.

3. Innenverkleidungsteil nach Anspruch 1 oder 2, wobei die Zwischenschicht-Schwächung entlang eine erste Gruppe paralleler oder im Wesentlichen paralleler Perforationslinien (32) und entlang eine zweite Gruppe paralleler oder im Wesentlichen paralleler Perforationslinien (34) angeordnet ist und wobei die Perforationslinien (32) der ersten Gruppe und die Perforationslinien (34) der zweiten Gruppe sich schneiden.

4. Innenverkleidungsteil nach Anspruch 3, wobei die Zwischenschicht-Schwächungen entlang der Perforationslinien (32, 34) der ersten Gruppe und der zweiten Gruppe einander nicht berühren.

5. Innenverkleidungsteil nach Anspruch 3 oder Anspruch 4, wobei die Perforationslinien (32) der ersten Gruppe und die Perforationslinien (34) der zweiten Gruppe sich in einem Winkel von 90 Grad bis 170 Grad, insbesondere von 90 Grad bis 120 Grad schneiden.

6. Innenverkleidungsteil nach einem der vorangehenden Ansprüche, wobei die Zwischenschicht-Schwächung ausgewählt ist aus einer Gruppe, welche besteht aus: eine die Zwischenschicht (20) vollständig durchdringende Perforation, Öffnung oder Durchlochung oder eine die Zwischenschicht (20) nur teilweise durchdringende Öffnung, Ritzung oder Einkerbung oder Kombinationen hiervon.

7. Innenverkleidungsteil nach einem der vorangehenden Ansprüche, wobei die Zwischenschicht wenigstens im Bereich einer in dem Innenverkleidungsteil gebildeten Airbagabdeckung flächig angeordnet ist und die Airbagabdeckung und die Schwächungslinie (22) überdeckt, wobei die Schwächungslinie (22) die Airbagabdeckung abgrenzt.

8. Innenverkleidungsteil nach Anspruch 6, wobei die Airbagabdeckung eine oder mehrere Haupt-Aufreißlinien aufweist, die entlang einer ersten Richtung und einer zweiten Richtung ausgerichtet sind, die durch die Schwächungslinie (22) definiert sind, wobei die erste Richtung zu der zweiten Richtung senkrecht oder ungefähr senkrecht ist, und wobei die Perforationslinie (32, 34) zu der ersten Richtung und zu der zweiten Richtung schräg verläuft.

9. Innenverkleidungsteil nach einem der vorangehenden Ansprüche, wobei die Zwischenschicht (20) eine Tragschicht und eine oder zwei Kleberschichten aufweist.

10. Innenverkleidungsteil nach einem der vorangehenden Ansprüche, wobei die Zwischenschicht (20) Papier, Vlies, Textil oder Gewebe aufweist.

11. Innenverkleidungsteil nach Anspruch 10, wobei die Zwischenschicht (20) Naturfasern, Kunstfasern oder ein Gemisch aus Natur- und Kunstfasern aufweist.

12. Innenverkleidungsteil nach einem der vorangehenden Ansprüche, wobei die Zwischenschicht (20) eine Dicke von 0,08 mm bis 0,2 mm, insbesondere von ungefähr 0,1 mm hat.

13. Innenverkleidungsteil nach einem der vorangehenden Ansprüche, wobei die Zwischenschicht (20) ein Flächengewicht von 15 bis 30 g/m², insbesondere von ungefähr 20 g/m² aufweist.

14. Innenverkleidungsteil nach einem der vorangehenden Ansprüche, mit ferner einer Abstandsschicht (14) zwischen dem Trägerbauteil (10) und der Dekorschicht (18), wobei auch die Abstandsschicht (14) eine lokale Schwächung entlang der Schwächungslinie (22) aufweist.

15. Innenverkleidungsteil nach Anspruch 14, wobei die Zwischenschicht zwischen der Dekorschicht (18) und der Abstandsschicht (14) liegt.

16. Innenverkleidungsteil nach Anspruch 15, wobei eine weitere Zwischenschicht zwischen dem Trägerbauteil (10) und der Abstandschicht (14) liegt, wobei die Zwischenschicht gemäß einem der vorangehenden Ansprüche ausgebildet ist.

17. Verfahren zum Herstellen eines Innenverkleidungsteils nach einem der vorangehenden Ansprüche, mit den Verfahrensschritten:
Bereitstellen einer Tragschicht,
Beschichten der Tragschicht mit einem Kleber, um eine Zwischenschicht (20) mit einer Kleberschicht auf jeder Seite der Tragschicht auszubilden,
Bereitstellen eines Trägerbauteils (10), einer Abstandsschicht (14) und einer Dekorschicht (18), wobei das Trägerbauteil (10) und die Dekorschicht (18) jeweils eine lokale Schwächung entlang einer Schwächungslinie (22) aufweisen
Herstellen eines Sandwichaufbaus aus dem Trägerbauteil (10), der Abstandsschicht (14) und der Dekorschicht (18), wobei die Abstandsschicht (14) und die Dekorschicht (18) durch die Zwischenschicht (20) miteinander verklebt werden und wobei die Zwischenschicht (20) eine Zwischenschicht-Schwächung aufweist, welche die Schwächungslinie (22) kreuzt.

## Claims

1. An interior trim part having
a support component (10), and
a decorative layer (18),
wherein the support component (10) and the decorative layer
each have a local weakened area (24, 26) along a weakening line (22) which allows the interior trim part to be torn open in controlled manner when a predefined force is applied to the support component (10), and having
an intermediate layer (20) between the support component (10) and the decorative layer (18), wherein the intermediate layer (20) is bonded adhesively to the decorative layer (18), **characterized in that** the intermediate layer (20) has an intermediate layer weakened area which intersects the weakening line (22).

2. Interior trim part according to claim 1, wherein the intermediate layer weakened area is arranged along multiple parallel or essentially parallel perforation lines (32, 34) that extend obliquely to the weakening line (22), at an angle not equal to 90 degrees, particularly at an angle of 20 degrees to 70 degrees, preferably 30 degrees to 60 degrees.

3. Interior trim part according to claim 1 or 2, wherein the intermediate layer weakened area is arranged along a first group of parallel or essentially parallel perforation lines (32) and along a second group of parallel or essentially parallel perforation lines (34), and wherein the perforation lines (32) of the first group and the perforation lines (34) of the second group intersect each other.

4. Interior trim part according to claim 3, wherein the intermediate layer weakened areas along the perforation lines (32, 34) of the first and second groups do not touch each other.

5. Interior trim part according to claim 3 or 4, wherein the perforation lines (32) of the first group and the perforation lines (34) of the second group intersect each other at an angle between 90 degrees and 170 degrees, particularly between 90 degrees and 120 degrees.

6. Interior trim part according to any one of the preceding claims, wherein the intermediate layer weakened area is chosen from a group consisting of: a perforation, an opening or a penetrating hole arrangement that completely passes through the intermediate layer (20), or an opening, scoring or notching that only partially passes through the intermediate layer (20) or combinations thereof.

7. Interior trim part according to any one of the preceding claims, wherein the intermediate layer is arranged flat at least in the region of an airbag cover formed in the interior trim part and covers the airbag cover and the weakening line (22), wherein the weakening line (22) delimits the airbag cover.

8. Interior trim part according to claim 6, wherein the airbag cover includes one or more primary tear lines that are aligned along a first direction and a second direction and are defined by the weakening line (22), wherein the first direction extends perpendicularly or approximately perpendicularly to the second direction, and wherein the perforation line (32, 34) extends obliquely to the first direction and to the second direction.

9. Interior trim part according to any one of the preceding claims, wherein the intermediate layer (20) includes a base layer and one or two adhesive layers.

10. Interior trim part according to any one of the preceding claims, wherein the intermediate layer (20) contains paper, non-woven fabric, textile or woven fabric.

11. Interior trim part according to claim 10, wherein the intermediate layer (20) contains natural fibres, synthetic fibres or a mixture of natural and synthetic fibers.

12. Interior trim part according to any one of the preceding claims, wherein the intermediate layer (20) has a thickness from 0.08 mm to 0.2 mm, particularly about 0.1 mm.

13. Interior trim part according to any one of the preceding claims, wherein the intermediate layer (20) has an area weight
per unit area of 15 to 30 g/m³, particularly about 20 g/m³.

14. Interior trim part according to any one of the preceding claims, further having a spacing layer (14) between the support component (10) and the decorative layer (18), wherein the spacing layer (14) also has a local weakened area along the weakening line (22).

15. Interior trim part according to claim 14, wherein the intermediate layer lies between the decorative layer (18) and the spacing layer (14).

16. Interior trim part according to claim 15, wherein a further intermediate layer lies between the support component (10) and the spacing layer (14), wherein the intermediate layer is constructed according to any one of the preceding claims.

17. Method for manufacturing an interior trim part according to any one of the preceding claims, including the method steps of:
providing a base layer,
coating the base layer with an adhesive to produce an intermediate layer (20) with an adhesive layer on each side of the base layer,
providing a support component (10), a spacing layer (14) and a decorative layer (18), wherein the support component (10) and the decorative layer (18) each has a local weakened area along a weakening line (22),
producing a sandwich structure from the support component (10), the spacing layer (14) and the decorative layer (18), wherein the spacing layer (14) and the decorative layer (18) are bonded to each other by the intermediate layer (20), and wherein the intermediate layer (20 has an intermediate layer weakened area which intersects the weakening line (22).

## Revendications

1. Partie de garniture intérieure avec
un composant de support (10) et
une couche de décoration (18),
le composant de support (10) et la couche de décoration (18) présentant chacun un affaiblissement local (24, 26) le long d'une ligne d'affaiblissement (22), qui permet une déchirure contrôlée de la partie de garniture intérieure lorsqu'une force prédéterminée est exercée sur le composant de support (10) et avec
une couche intermédiaire (20) entre le composant de support (10) et la couche de décoration (18), la couche intermédiaire (20) étant collée avec la couche de décoration (18), **caractérisée en ce que** la couche intermédiaire (20) comprend un affaiblissement de couche intermédiaire qui croise la ligne d'affaiblissement (22).

2. Partie de garniture intérieure selon la revendication 1, l'affaiblissement de couche intermédiaire étant disposé le long de plusieurs lignes de perforations (32, 34) parallèles ou globalement parallèles, qui s'étendant de manière oblique par rapport à la ligne d'affaiblissement (22), avec un angle différent de 90 degrés, plus particulièrement un angle de 20 degrés à 70 degrés, de préférence de 30 degrés à 60 degrés.

3. Partie de garniture intérieure selon la revendication 1 ou 2, l'affaiblissement de couche intermédiaire étant disposé le long d'un premier groupe de lignes de perforations (32) parallèles ou globalement parallèles et le long d'un deuxième groupe de lignes de perforations (34) parallèles ou globalement parallèles et les lignes de perforations (32) du premier groupe et les lignes de perforations (34) du deuxième groupe se coupant.

4. Partie de garniture intérieure selon la revendication 3, les affaiblissements de couche intermédiaire le long des lignes de perforations (32, 34) du premier groupe et du deuxième groupe ne se touchant pas entre elles.

5. Partie de garniture intérieure selon la revendication 3 ou 4, les lignes de perforations (32) du premier groupe et les lignes de perforations (34) du deuxième groupe se coupant avec un angle de 90 degrés à 170 degrés, plus particulièrement de 90 degrés à 120 degrés.

6. Partie de garniture intérieure selon l'une des revendications précédentes, l'affaiblissement de couche intermédiaire étant sélectionné dans un groupe constitué : d'une perforation, ouverture ou perçage traversant entièrement la couche intermédiaire (20) ou une ouverture, une pré-découpe ou une rainure, ou des combinaisons de celles-ci, traversant seulement partiellement la couche intermédiaire (20).

7. Partie de garniture intérieure selon l'une des revendications précédentes, la couche intermédiaire étant disposée au moins au niveau d'une protection d'airbag formé dans la partie de garniture intérieure et le recouvrement d'airbag recouvre la protection d'airbag et a ligne d'affaiblissement (22), la ligne d'affaiblissement (22) délimitant la protection d'airbag.

8. Partie de garniture intérieure selon la revendication 6, la protection d'airbag comprenant une ou plusieurs lignes de déchirure principales, qui sont orientées dans une première direction et une deuxième direction qui sont définies par la ligne d'affaiblissement (22), la première direction étant perpendiculaire ou approximativement perpendiculaire à la deuxième direction, et la ligne de perforations (32, 34) s'étendant de manière oblique par rapport à la première direction ou à la deuxième direction.

9. Partie de garniture intérieure selon l'une des revendications précédentes, la couche intermédiaire (20) comprenant une couche de support et une ou deux couches adhésives.

10. Partie de garniture intérieure selon l'une des revendications précédentes, la couche intermédiaire (20) comprenant du papier, du tissu non-tissé, du textile ou un tissu.

11. Partie de garniture intérieure selon la revendication 10, la couche intermédiaire (20) comprenant des fibres naturelles, des fibres synthétiques ou un mélange de fibres naturelles et de fibres synthétiques.

12. Partie de garniture intérieure selon l'une des revendications précédentes, la couche intermédiaire (20) présentant une épaisseur de 0,08 mm à 0,2 mm, plus particulièrement d'environ 0,1 mm.

13. Partie de garniture intérieure selon l'une des revendications précédentes, la couche intermédiaire (20) présentant un poids surfacique de 15 à 30 g/m², plus particulièrement d'environ 20 g/m².

14. Partie de garniture intérieure selon l'une des revendications précédentes, avec en outre une couche d'écartement (14) entre le composant de support (10) et la couche de décoration (18), la couche d'écartement (14) présentant également un affaiblissement local le long de la ligne d'affaiblissement (22).

15. Partie de garniture intérieure selon la revendication 14, la couche intermédiaire se trouvant entre la couche de décoration (18) et la couche d'écartement (14).

16. Partie de garniture intérieure selon la revendication 15, une autre couche intermédiaire se trouvant entre le composant de support (10) et la couche d'écartement (14), cette couche intermédiaire étant conçue selon l'une des revendications précédentes.

17. procédé de fabrication d'une partie de garniture intérieure selon l'une des revendications précédentes, avec les étapes suivantes :
préparation d'une couche de support,
revêtement de la couche de support avec un adhésif, afin de former une couche intermédiaire (20) avec une couche adhésive sur chaque côté de la couche de support,
préparation d'un composant de support (10), d'une couche d'écartement (14) et d'une couche de décoration (18), le composant de support (10) et la couche de décoration (18) comprenant chacun un affaiblissement local le long de la ligne d'affaiblissement (22)
fabrication d'une structure en sandwich constituée du composant de support (10), de la couche d'écartement (14) et de la couche de décoration (18), la couche d'écartement (14) et la couche de décoration (18) étant collées ensemble par la couche intermédiaire (20) et la couche intermédiaire (20) comprenant un affaiblissement de couche intermédiaire qui croise la ligne d'affaiblissement (22).
